# EUROPÄISCHE PATENTSCHRIFT

(11) **EP 2 690 334 B1**
(45) Veröffentlichungstag und Bekanntmachung des Hinweises auf die Patenterteilung: **01.06.2016**
(21) Anmeldenummer: 13165539.1
(22) Anmeldetag: 26.04.2013
(51) Int. Cl.: F16L 9/19, F16L 41/00, F16L 41/08, F23J 13/08, F16L 7/00, F16L 9/18, F23D 14/66, F16L 45/00, F23J 13/02, F23J 13/04

(54) **Abgas-/Verbrennungsluft-Rohrsystem**
Flue gas/combustion air pipe system
Système de conduite de gaz d'échappement/d'air de combustion

(30) Priorität: 24.07.2012 DE 102012106707
(43) Veröffentlichungstag der Anmeldung: 29.01.2014
(73) Patentinhaber: Bächle, Dieter, 8597 Landschlacht (CH)
(72) Erfinder: Bächle, Dieter, 8597 Landschlacht (CH)
(74) Vertreter: Wagner, Kilian

(56) Entgegenhaltungen:
- EP-A2- 1 318 352
- DE-A1-102008 051 271
- DE-B3-102004 019 246

## Beschreibung

Die Erfindung betrifft ein kombiniertes Abgas-/Verbrennungsluft-Rohrsystem gemäß dem Oberbegriff des Anspruchs 1, umfassend zwei, insbesondere koaxial ineinander verschachtelte Rohre, nämlich ein, bevorzugt metallisches Außenrohr und ein innerhalb des Außenrohrs verlaufendes, insbesondere aus Kunststoff ausgebildetes, Abgasrohr, wobei zwischen Außenrohr und Abgasrohr ein Verbrennungsluftkanal (Frischluftkanal) zur Zuführung von Verbrennungsluft zum Heizungsbrenner gebildet ist. Das Abgas verläuft hierzu gegenläufig zur Frischluft durch das Abgasrohr nach außen.

Aus der DE 10 2004 019 246 B3 ist ein Abgas-/Verbrennungsluft-Rohrsystem bekannt, wobei zur kombinierten axialen und radialen Fixierung der beiden ineinander verschachtelten Rohre relativ zueinander ein aus einem Drahtstrang gebildetes, federndes Verbindungselement vorgesehen ist. Das bekannte Verbindungselement hat sich bewährt - es bestehen jedoch Bestrebungen die Montage des Rohrsystems weiter zu erleichtern. Das bekannte Rohrsystem umfasst zudem im Außenrohr eine Kontrollöffnung, die mit einem Verschlussdeckel verschließbar ist. Der Verschlussdeckel ist am Außenrohr fixierbar.

Aus der DE 10 2008 051 271 A1 ist ebenfalls ein Abgas-/Verbrennungsluft-Rohrsystem bekannt, wobei dem Abgasrohr sogenannte radiale Flossen zugeordnet sind, die das Verbrennungsluftrohr von dem Abgasrohr beabstanden. Auch hier ist ein Verschlussdeckel am äußeren Verbrennungsluftrohr befestigt. Ausgehend von dem vorgenannten Stand der Technik liegt der Erfindung die Aufgabe zugrunde ein hinsichtlich einer erleichterten Montage verbessertes kombiniertes Abgas-/Verbrennungsluft-Rohrsystem, insbesondere für Heizungsanlagen anzugeben.

Diese Aufgabe wird mit den Merkmalen des Anspruchs 1 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüche und/oder den Figuren offenbarten Merkmalen.

Der Erfindung liegt der Gedanke zugrunde, kombinierte Fixiermittel zur gleichzeitigen axialen und radialen Sicherung des Außenrohrs und des Abgasrohrs relativ zueinander sowie zur Fixierung des Verschlussdeckels am Außenrohr vorzusehen. Erfindungsgemäß wird dies durch mindestens einen am Abgasrohr vorgesehen, insbesondere angeformten Radialfortsatz erreicht, an welchem ein Bolzenteil festgelegt ist, welches eine dem Bolzenteil zugeordnete und vorzugsweise radial mit dem Radialfortsatz fluchtende Durchgangsöffnung im Außenrohr durchsetzt, derart, dass an dem Bolzenteil ein Fixierteil zur lösbaren Fixierung des Verschlussdeckels am Außenrohr anordnenbar ist. Anders ausgedrückt ist am Abgasrohr mindestens ein Radialfortsatz vorgesehen, vorzugsweise einstückig mit dem insbesondere als Spritzgussteil ausgebildeten Abgasrohr ausgebildet, der geeignet und bestimmt ist, um daran ein, insbesondere aus Metall ausgebildetes Bolzenteil festzulegen, wobei noch weiter bevorzugt das Bolzenteil mit einem Gewinde, insbesondere einem Außengewinde, am Radialfortsatz, insbesondere in einer radialen Öffnung, verschraubt ist, wobei mittels des Radialfortsatzes der zur Ausbildung des Verbrennungsluftkanals notwendige Abstand zwischen dem inneren Abgasrohr und dem äußeren, vorzugsweise metallischen Außenrohr eingehalten wird. Als besonders zweckmäßig hat es sich erwiesen, wenn sich der Radialfortsatz an der Innumfangsfläche des Außenrohres, insbesondere in einem Randbereich der Durchgangsöffnung abstützt, um so einen definierten Radialabstand zwischen Außenrohr und Abgasrohr einzuhalten. Das Bolzenteil, welches bevorzugt mit dem Radialfortsatz, vorzugsweise im Radialfortsatz, verschraubt ist, wirkt mit einem Fixierteil zur lösbaren Fixierung des Verschlussdeckels zusammen, wobei das Fixierteil bevorzugt mit dem Bolzenteil verschraubbar ist, um den Verschlussdeckel verklemmend am Außenrohr festzulegen. Ganz besonders bevorzugt sind mindestens zwei derartige Radialfortsatz-Bolzenteil-Fixierteil-Kombinationen zur Fixierung des Verschlussdeckels an zwei in Umfangsrichtung voneinander beabstandeten Stellen vorgesehen. Durch die Erfindung wird durch eine kombinierte Maßnahme eine radiale und axiale Fixierung der beiden Rohre aneinander sichergestellt und gleichzeitig auf einfache und komfortable Weise eine Fixierung des Verschlussdeckels am Außenrohr ermöglicht. Bei Bedarf kann auf zusätzliche Verbindungselemente, wie diese in der DE 10 2004 019 246 B3 beschrieben sind, verzichtet werden. Bei Bedarf können derartige Verbindungsteile zu einer weiteren axialen und radialen Sicherung zusätzlich vorgesehen werden.

Wie eingangs bereits erwähnt, hat es sich als besonders vorteilhaft erwiesen, ein metallisches Bolzenteil mit einem Kunststoff-Abgasrohr, insbesondere einem als Kunststoffspritzgussteil ausgebildeten Abgasrohr zu kombinieren, wobei das Bolzenteil bevorzugt mit einem Gewinde, insbesondere einem Außengewinde, mit dem Radialfortsatz verschraubt ist. Zu Montagezwecken ist es vorteilhaft, das Außengewinde des Bolzenteils als kostengünstig realisierbares Blechschraubenaussengwinde auszubilden, da in diesem Fall auf eine Vorformung eines Gegengewindes, insbesondere eines Innengewindes im Radialfortsatz verzichtet werden kann. Bevorzugt weist der Radialfortsatz eine in radialer Richtung verlaufende Aufnahmeöffnung zum Einschrauben des Bolzenteils auf.

Als besonders zweckmäßig hat es sich herausgestellt, das Fixierteil zur lösbaren Fixierung des Verschlussdeckels als Innengewindemutter auszubilden, die auf ein korrespondierendes Außengewinde des Bolzenteils aufgeschraubt ist, wobei vorgenanntes Außengewinde aus der Durchgangsöffnung im vorzugsweise metallischen Außenrohr hinausragt.

Besonders bevorzugt weist das Bolzenteil in einem außerhalb des Außenrohres angeordneten Abschnitt einen in Richtung Außenrohr weisenden Absatz, insbesondere eine Ringschulter und/oder einen Umfangsbund auf, damit sich das Bolzenteil hiermit in radialer Richtung von außen an der Mantelfläche des Außenrohres oder einer dort vorgesehenen Unterlegscheibe abstützen kann. Bevorzugt kann auf diese Weise das Außenrohr radial eingeklemmt werden zwischen diesem äußeren Absatz und einer entsprechenden Gegenfläche des Radialfortsatzes, wobei es sich bei letztgenannter Fläche vorzugsweise um eine Ringfläche handelt, die eine Aufnahmeöffnung für das Bolzenteil stirnseitig umgibt.

Zur optimalen Fixierung des Verschlussdeckels hat es sich als vorteilhaft herausgestellt, wenn das Bolzenteil mit einem außerhalb des Außenrohrs gelegenen Abschnitt eine Aussparung im Verschlussdeckel radial durchsetzt, wobei es zu einer erleichterten Montage und Demontage des Deckels vorteilhaft ist, wenn diese Aussparung seitlich offen ist, um ein seitliches Einschnappen des Verschlussdeckels um das Bolzenteil auch bei nicht vollständig entferntem Fixierteil zu ermöglichen.

Wie eingangs erwähnt, hat es sich als besonders vorteilhaft herausgestellt, mindestens zwei, vorzugsweise ausschließlich zwei, Radialfortsatz-Bolzenteil-Fixierteil-Kombinationen vorzusehen, insbesondere weiterbildungsgemäß derart, dass die Bolzenteile auf einer gemeinsamen gedachten Achse liegen, so dass eine Art Schwenkachse definiert wird, um die das Abgasrohr innerhalb des Außenrohrs verkippen kann, zumindest bis keine (zusätzlichen), beispielsweise in der DE 10 2004 019 246 B3 beschriebenen Verbindungselemente vorgesehen werden. Diese Verkippbarkeit ermöglicht eine besonders komfortable Montage weiterer Rohrteile an dem beanspruchten Rohrsystem.

Bevorzugt ist dem Verschlussdeckel zum Verschließen des Außenrohres ein Abgasrohrdeckel im Abgasrohr vorgesehen, der gelöst werden kann, nachdem der Verschlussdeckel durch Lösen des mindestens einen Fixierteils abgelöst wurde. Besonders zweckmäßig ist es nun, wenn sich der Verschlussdeckel auf dem Abgasrohrdeckel abstützt, so dass dieser in radialer Richtung gesichert ist und somit ein möglicher Überdruck im Abgasrohr nicht zu einem unbeabsichtigten Herauslösen des Abgasrohrdeckels führen kann.

Ganz besonders bevorzugt ist das Rohrsystem als Rohrbogensystem ausgebildet, wobei Abgasrohr und Außenrohr jeweils mindestens einen Rohrbogen umfassen. Es ist jedoch auch eine gerade Ausführung des Abgasrohrs mit einem geraden Abgasrohr und einem geraden Außenrohr realisierbar. Besonders zweckmäßig ist es, wenn das Abgasrohr das Außenrohr an einem Rohrende, insbesondere um mindestens 0,5cm überragt.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine teilgeschnittene Darstellung eines Rohrsystems,

- Fig. 2: eine perspektivisch Außenansicht des Rohrsystems gemäß Fig. 1,
- Fig. 3: eine Schnittansicht entlang der Schnittlinie A-A gemäß Fig. 1,
- Fig. 4: ein Detail X aus Fig. 3, und
- Fig. 5: ein Detail Y aus Fig. 3.

In den Figuren sind gleiche Elemente und Elemente mit der gleichen Funktion mit den gleichen Bezugszeichen gekennzeichnet.

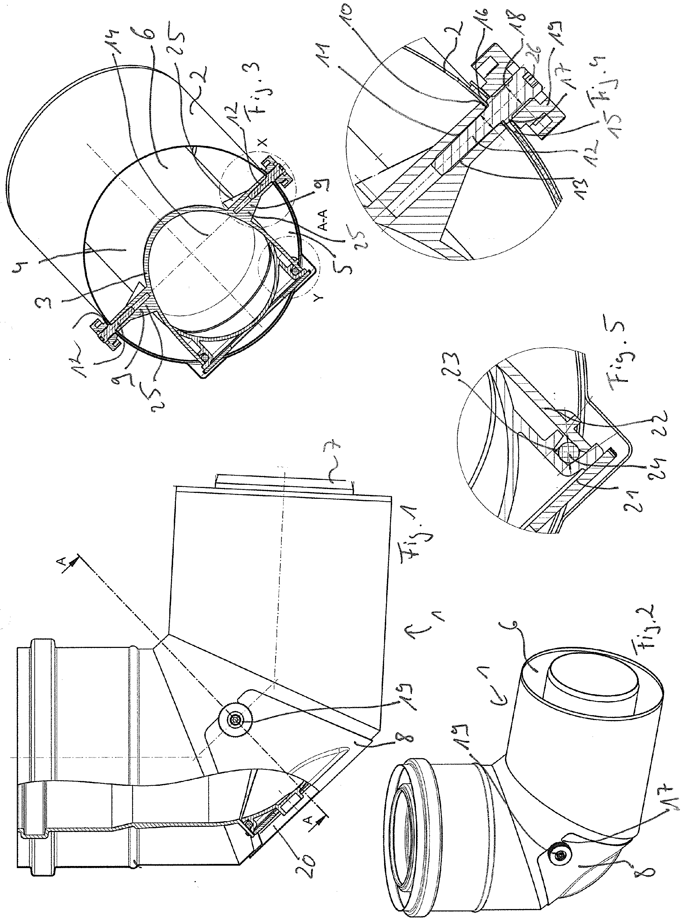

In den Figuren 1 bis 5 ist in teilweise geschnittenen Darstellungen und Detailzeichnungen ein bogenförmig gestaltetes kombiniertes Abgas-/Verbrennungsluft-Rohrsystem 1 für Heizungsanlagen gezeigt. Das Rohrsystem umfasst ein hier aus Metall, insbesondere Edelstahl ausgebildetes Außenrohr 2, in dem koaxial ein einen geringeren Durchmesser aufweisendes, als Kunststoffspritzgussteil ausgebildetes Abgasrohr 3 aufgenommen ist. Die Mantelfläche 4 des Abgasrohres 3 ist radial beabstandet von der Innenumfangsfläche 5 des Außenrohrs 2, so dass Außenrohr 2 und Abgasrohr 3 einen ringförmigen Verbrennungsluftkanal 6 (Frischluftkanal) begrenzen.

Wie sich aus Fig. 1 ergibt, überragt ein Rohrende 7 des Abgasrohres 3 das Außenrohr 2 in axialer Richtung, um somit eine erleichterte Montage zu ermöglichen.

Zur gleichzeitigen axialen und radialen Sicherung von Außenrohr 2 und Abgasrohr 3 relativ zueinander und zur Fixierung eines im Folgenden noch zu erläuternden, als Blechdeckel ausgeführten Verschlussdeckels 8, sind an dem Außenrohr 2 einteilig mit diesem ausgebildete Radialfortsätze 9 angeformt, die sich am Innenumfang des Außenrohrs 2 abstützen und zwar mit einer stirnseitigen Ringfläche 10, die eine in radialer Richtung verlaufende Aufnahmeöffnung 11 umgibt. Zur Verstärkung der Radialfortsätze 9 sind an diesen seitliche Streben 25 angeformt, die sich nach radial außen verjüngen. Die Aufnahmeöffnungen 11 dienen jeweils zur verschraubenden Aufnahme eines metallischen Bolzenteils 12, welches mit einem als Blechschraubengewinde ausgebildeten Gewinde 13 in die vor dem Verschraubvorgang innengwindefreie Aufnahmeöffnung eingeschraubt sind. Beide Bolzenteile 12 befinden sich auf einer gemeinsamen Achse 14.

Die Bolzenteile 12 durchsetzen jeweils eine Durchgangsöffnung 15 im Außenrohr 2 und stützen sich von radial außen nach radial innen mit einem von einer Ringschulter gebildeten Absatz 16 am Außenrohr 2 ab und klemmen dieses zwischen dem jeweiligen Absatz 16 und dem zugehörigen Radialfortsatz 9. Zum Einschrauben der Bolzenteile 12 in die zugehörigen Aufnahmeöffnungen 11 sind die Bolzenteile radial außen mit einem Antrieb 26 versehen.

Gleichzeitig durchsetzen die Bolzenteile 12 jeweils eine seitlich offene Aussparung 17 im Verschlussdeckel 8, wobei die Bolzenteile 12 in dem außerhalb der Aussparung 17 gelegenen Bereich mit einem Außengewinde 18 versehen ist, mit dem ein als Innengewindemutter ausgebildetes Fixierteil 19 verschraubt ist. Das Fixierteil 19 stützt sich außen am Verschlussdeckel 8 ab und klemmt diesen somit gegen den Verschlussdeckel 8. Durch Lösen des Fixierteils 19 kann der Verschlussdeckel 8 abgelöst werden.

Wie sich insbesondere aus den Figuren 1 und 2 ergibt, sind die Fixierteile 19 am Außenumfang mit einer Rändelung versehen, um diese von Hand betätigen zu können.

Der Verschlussdeckel 8 verschließt nicht nur eine Kontrollöffnung 20 im Außenrohr, sondern dient gleichzeitig als Sicherung für einen vorzugsweise aus Kunststoff ausgebildeten Abgasrohrdeckel 21, der in einem zugeordneten, angeformten Rohrstutzen 22 des Abgasrohrs dichtend aufgenommen ist. Zur Herstellung einer dichten Verbindung ist in einer umlaufenden Ringnut 23 des Abgasrohrdeckels 21 eine als O-Ringdichtung ausgebildete Ringdichtung 24 vorgesehen, die sich in radialer Richtung am Rohrstutzen 22 abstützt.

### Bezugszeichenliste

- 1: Abgas-/Verbrennungsluft-Rohrsystem
- 2: Außenrohr
- 3: Abgasrohr
- 4: Mantelfläche
- 5: Innenumfangsfläche
- 6: Verbrennungsluftkanal
- 7: Rohrende
- 8: Verschlussdeckel
- 9: Radialfortsätze
- 10: Ringfläche
- 11: Aufnahmeöffnung
- 12: Bolzenteil
- 13: Gewinde des Bolzenteils, hier Inngewinde
- 14: Achse
- 15: Durchgangsöffnungen
- 16: Absätze
- 17: Aussparungen
- 18: Außengewinde
- 19: Fixierteile
- 20: Kontrollöffnung
- 21: Abgasrohrdeckel
- 22: Rohrstutzen
- 23: Ringnut
- 24: Ringdichtung
- 25: Streben
- 26: Antriebe

## Patentansprüche

1. Kombiniertes Abgas-/Verbrennungsluft-Rohrsystem umfassend ein äußeres, eine Kontrollöffnung (20) aufweisendes Außenrohr (2) und ein in dem Außenrohr (2) angeordnetes Abgasrohr (3), wobei eine Abgasrohrmantelfläche radial von einer Innenumfangsfläche (5) des Außenrohrs (2) derart radial beabstandet ist, dass zwischen Abgasrohr (3) und Außenrohr (2) ein ringförmiger Verbrennungsluftkanal (6) gebildet ist und wobei der Kontrollöffnung (20) ein lösbar angeordneter Verschlussdeckel (8) zugeordnet ist, wobei am Abgasrohr (3) ein Radialfortsatz (9) zur radialen Beabstandung der Abgasrohrmantelfläche von der Innenumfangsfläche (5) des Außenrohrs (2) vorgesehen ist,
**dadurch gekennzeichnet,**
**dass** an dem Radialfortsatz (9) ein Bolzenteil (12) festgelegt ist, das eine diesem zugeordnete Durchgangsöffnung (15) im Außenrohr (2) durchsetzt und dass an dem Bolzenteil (12) ein Fixierteil (19) zur lösbaren Fixierung des Verschlussdeckels (8) am Außenrohr (2) vorgesehen ist.

2. Rohrsystem nach Anspruch 1,
**dadurch gekennzeichnet,**
**dass** das, bevorzugt metallische, Bolzenteil (12) mit einem, insbesondere als Außengewinde (18), bevorzugt als Blechschraubenaußengewinde, ausgebildeten Gewinde mit dem Radialfortsatz (9) verschraubt ist.

3. Rohrsystem nach Anspruch 2,
**dadurch gekennzeichnet,**
**dass** das Bolzenteil (12) in eine radiale Innengewindeöffnung des Radialfortsatzes (9) eingeschraubt ist.

4. Rohrsystem nach einem der vorhergehenden Ansprüche,
**dadurch gekennzeichnet,**
**dass** das Fixierteil (19) als Innengewindemutter ausgebildet ist, die auf ein korrespondierendes Außengewinde (18) des Bolzenteils (12) aufgeschraubt ist und den Verschlussdeckel (8) gegen das Außenrohr (2) presst.

5. Rohrsystem nach einem der vorhergehenden Ansprüche,
**dadurch gekennzeichnet,**
**dass** sich das Bolzenteil (12) mit einem Absatz (16), insbesondere einer Ringschulter, von außen auf der Mantelfläche (4) des Außenrohres (2) oder einer dort vorgesehenen Unterlegscheibe abstützt.

6. Rohrsystem nach einem der vorhergehenden Ansprüche,
**dadurch gekennzeichnet,**
**dass** das Bolzenteil (12) eine, insbesondere seitlich offene, Aussparung (17) im Verschlussdeckel (8) durchsetzt.

7. Rohrsystem nach einem der vorhergehenden Ansprüche,
**dadurch gekennzeichnet,**
**dass** der Verschlussdeckel (8) mit zwei auf einer gedachten Achse (14) liegenden Bolzenteilen (12) und Fixierteilen (19) an zwei diesen zugeordneten Radialfortsätzen fixiert ist.

8. Rohrsystem nach einem der vorhergehenden Ansprüche,
**dadurch gekennzeichnet,**
**dass** der Verschlussdeckel (8) radial außerhalb eines dichtend eine Abgasrohröffnung verschließenden Abgasrohrdeckels (21) angeordnet ist, vorzugsweise sich als Sicherungsteil auf diesem abstützt.

9. Rohrsystem nach einem der vorhergehenden Ansprüche,
**dadurch gekennzeichnet,**
**dass** Abgasrohr (3) und Außenrohr (2) als Rohrbögen ausgebildet sind, bevorzugt dass das Abgasrohr (3) das Außenrohr (2) an einem Rohrende (7) überragt, oder das Abgasrohr (3) und Außenrohr (2) als gerade Rohrstücke ausgebildet sind.

10. Rohrsystem nach einem der vorhergehenden Ansprüche,
**dadurch gekennzeichnet,**
**dass** der Radialfortsatz (9) an das Abgasrohr (3) angeformt ist.

11. Rohrsystem nach einem der vorhergehenden Ansprüche,
**dadurch gekennzeichnet,**
**dass** das Außenrohr metallisch ist.

12. Rohrsystem nach einem der vorhergehenden Ansprüche,
**dadurch gekennzeichnet,**
**dass** das Abgasrohr (3) aus Kunststoff besteht.

13. Verwendung des Abgas-/Verbrennungsluft-Rohrsystem nach einem der vorhergehenden Ansprüche für Heizungsanlagen.

## Claims

1. A combined exhaust gas/combustion air pipe system, comprising an exterior outer pipe (2) having a control opening (20), and an exhaust pipe (3) arranged in the outer pipe (2), wherein an exhaust pipe outer surface is spaced apart radially from an inner circumferential surface (5) of the outer pipe (2) such that an annular combustion air channel (6) is formed between exhaust pipe (3) and outer pipe (2) and wherein a detachably arranged closure cover (8) is associated with the control opening (20), wherein on the exhaust pipe (3) a radial extension (9) is provided for the radial spacing of the exhaust pipe outer surface from the inner circumferential surface (5) of the outer pipe (2), **characterized in that**
a bolt part (12) is secured on the radial extension (9), which bolt part penetrates a through-opening (15), associated therewith, in the outer pipe (2) and that on the bolt part (12) a fixing part (19) is provided for the detachable fixing of the closure cover (8) on the outer pipe (2).

2. The pipe system according to Claim 1, **characterized in that** the, preferably metallic, bolt part (12) is screwed to the radial extension (9) with a thread, constructed in particular as an external thread (18), preferably as a tapping screw external thread.

3. The pipe system according to Claim 2, **characterized in that** the bolt part (12) is screwed into a radial internal thread opening of the radial extension (9).

4. The pipe system according to one of the preceding claims, **characterized in that** the fixing part (19) is constructed as an internal threaded nut, which is screwed onto a corresponding external thread (18) of the bolt part (12) and presses the closure cover (8) against the outer pipe (2).

5. The pipe system according to one of the preceding claims, **characterized in that** the bolt part (12) rests with a shoulder (16), in particular an annular shoulder, from the exterior on the outer surface (4) of the outer pipe (2) or on a washer provided there.

6. The pipe system according to one of the preceding claims, **characterized in that** the bolt part (12) penetrates an opening (17), in particular laterally open, in the closure cover (8).

7. The pipe system according to one of the preceding claims, **characterized in that** the closure cover (8) is fixed with two bolt parts (12) lying on an imaginary axis (14) and fixing parts (19) on two radial extensions associated therewith.

8. The pipe system according to one of the preceding claims, **characterized in that** the closure cover (8) is arranged radially outside an exhaust pipe cover (21) closing an exhaust pipe opening in a sealing manner, preferably rests as a securing part thereon.

9. The pipe system according to one of the preceding claims, **characterized in that** the exhaust pipe (3) and outer pipe (2) are constructed as elbow pipes, preferably that the exhaust pipe (3) projects over the outer pipe (2) at a pipe end (7), or the exhaust pipe (3) and outer pipe (2) are constructed as straight pipe sections.

10. The pipe system according to one of the preceding claims, **characterized in that** the radial extension (9) is formed onto the exhaust pipe (3).

11. The pipe system according to one of the preceding claims, **characterized in that** the outer pipe is metallic.

12. The pipe system according to one of the preceding claims, **characterized in that** the exhaust pipe (3) consists of plastic.

13. A use of the exhaust gas/combustion air pipe system according to one of the preceding claims for heating systems.

## Revendications

1. Système combiné de conduite de gaz d'échappement/d'air de combustion comprenant une conduite extérieure (2) présentant une ouverture de contrôle (20) et une conduite de gaz d'échappement (3) disposée dans la conduite extérieure (2), dans lequel une surface latérale de la conduite de gaz d'échappement est espacée radialement d'une surface périphérique intérieure (5) de la conduite extérieure (2) de telle manière qu'un canal annulaire d'air de combustion (6) soit formé entre la conduite de gaz d'échappement (3) et la conduite extérieure (2) et dans lequel un couvercle de fermeture (8) agencé de façon amovible est associé à l'ouverture de contrôle (20), dans lequel il est prévu sur la conduite de gaz d'échappement (3) un prolongement radial (9) pour l'espacement radial de la surface latérale de la conduite de gaz d'échappement de la surface périphérique intérieure (5) de la conduite extérieure (2), **caractérisé en ce**
**qu'**une partie de boulon (12) est fixée sur le prolongement radial (9) et traverse une ouverture de passage (15) associée à celui-ci dans la conduite extérieure (2) et en ce qu'il est prévu sur la partie de boulon (12) une partie de fixation (19) pour la fixation démontable du couvercle de fermeture (8) sur la conduite extérieure (2).

2. Système de conduite selon la revendication 1, **caractérisé en ce que** la partie de boulon (12), de préférence métallique, est vissée au prolongement radial (9) avec un filet réalisé en particulier sous forme de filet extérieur (18), de préférence sous forme de filet extérieur de vis à tôle.

3. Système de conduite selon la revendication 2, **caractérisé en ce que** la partie de boulon (12) est vissée dans une ouverture radiale à filet intérieur du prolongement radial (9).

4. Système de conduite selon l'une quelconque des revendications précédentes, **caractérisé en ce que** la partie de fixation (19) est réalisée sous la forme d'un écrou à filet intérieur, qui est vissé sur un filet extérieur correspondant (18) de la partie de boulon (12) et qui presse le couvercle de fermeture (8) contre la conduite extérieure (2).

5. Système de conduite selon l'une quelconque des revendications précédentes, **caractérisé en ce que** la partie de boulon (12) s'appuie avec un retrait (16), en particulier un épaulement annulaire, par l'extérieur sur la surface latérale (4) de la conduite extérieure (2) ou sur une rondelle prévue à cet endroit.

6. Système de conduite selon l'une quelconque des revendications précédentes, **caractérisé en ce que** la partie de boulon (12) traverse une découpe (17), en particulier ouverte latéralement, dans le couvercle de fermeture (8).

7. Système de conduite selon l'une quelconque des revendications précédentes, **caractérisé en ce que** le couvercle de fermeture (8) est fixé avec deux parties de boulon (12) et deux parties de fixation (19) situées sur un axe imaginaire (14) sur deux prolongements radiaux associés à celles-ci.

8. Système de conduite selon l'une quelconque des revendications précédentes, **caractérisé en ce que** le couvercle de fermeture (8) est disposé radialement à l'extérieur d'un couvercle (21) de la conduite de gaz d'échappement fermant hermétiquement une ouverture de la conduite de gaz d'échappement, et de préférence s'appuie sur celui-ci en tant que partie de fixation.

9. Système de conduite selon l'une quelconque des revendications précédentes, **caractérisé en ce que** la conduite de gaz d'échappement (3) et la conduite extérieure (2) sont réalisées sous la forme de conduites coudées, de préférence en ce que la conduite de gaz d'échappement (3) dépasse la conduite extérieure (2) à une extrémité de conduite (7), ou la conduite de gaz d'échappement (3) et la conduite extérieure (2) sont réalisées sous la forme d'éléments de conduite droits.

10. Système de conduite selon l'une quelconque des revendications précédentes, **caractérisé en ce que** le prolongement radial (9) est formé sur la conduite de gaz d'échappement (3).

11. Système de conduite selon l'une quelconque des revendications précédentes, **caractérisé en ce que** la conduite extérieure est métallique.

12. Système de conduite selon l'une quelconque des revendications précédentes, **caractérisé en ce que** la conduite de gaz d'échappement (3) est constituée de matière plastique.

13. Utilisation du système de conduite de gaz d'échappement/d'air de combustion selon l'une quelconque des revendications précédentes pour des installations de chauffage.
